# EUROPEAN PATENT APPLICATION

(11) **EP 2 584 754 A1**
(43) Date of publication of application: **24.04.2013**
(21) Application number: 11306338.2
(22) Date of filing: 17.10.2011
(51) Int. Cl.: H04L 29/06, H04L 29/08, H04L 12/24

(54) **Method of managing a network of clients**

(71) Applicant: Alcatel Lucent, 75007 Paris (FR)
(72) Inventor: Foerster, Christopher, 70184 Stuttgart (DE); Strauss, Thomas, 73734 Esslingen (DE); Schreiber, Alexander, 70378 Stuttgart (DE); Kirchmann, Marc, 73102 Birenbach (DE)
(74) Representative: ALU Antw Patent Attorneys

(57) **Abstract**

Method of managing a network of clients, the method comprising the steps of maintaining a plurality of commands on a server and, in response to receiving a request from a client, composing, based on a property of the client, a command file from the plurality of commands and submitting the command file to the client.

## Description

### Field of the Invention

The invention relates to a method of managing a network of clients.

### Background

This section introduces aspects that may be helpful in facilitating a better understanding of the invention. Accordingly, the statements of this section are to be read in this light and are not to be understood as admissions about what is in the prior art or what is not in the prior art.

According to a known management solution for large embedded system networks, client software running on the embedded device can receive updates like new drivers and software components from an update server. This server can only provide general updates for all devices. So it is not possible to control and manage a single client device remotely.

### Summary

The present invention was made in view of the prior art described above, and the object of some embodiments is to provide a practical method capable of controlling and managing a single client device remotely.

According to an embodiment there is provided a method of managing a network of clients, the method comprising the steps of maintaining a plurality of commands on a server and, in response to receiving a request from a client, composing, based on a property of the client, a command file from the plurality of commands and submitting the command file to the client.

### Description of the Embodiments

Hereinafter, the best mode for carrying out a method according to an embodiment is described in detail.

This solution is designed to manage large networks with a high granularity. So it is possible to control huge groups of devices and even single devices in such groups individually. You can even to execute live commands in this subset. The system has an asynchronous architecture. That means commands can be added via a web interface on the server and the individual configuration of each client will be pulled by the client in individually set (short) time intervals. The solution is using web standards like HTTP for the requests and XML for commands.

A typical embodiment bears the additional advantage of enhanced security, as the client/server communication may only be initiated by the client. This "pull" approach eliminates the possibility of malware injection by intruders, who may otherwise be able to contact the client by posing as the legitimate command server.

All features of the invention will be described with the example to digital signage networks but can be used for all other huge client-server networks where is a need of remote management.

Each client of a digital signage network is connected e.g. via 3G and displays infotainment and advertising on a screen.

There are four main modules (mechanisms) described in this invention:
- Update Mechanism
- Process Monitor
- Task Monitor
- Settings Monitor

In the following all four modules are described.

### Update Mechanism:

The actually commands in an update will be requested in short time intervals which allows a kind of live reaction in network operating centers. A local file containing the last or initial state of commands works as a fall back solution if the internet connection is temporarily not available. This local file will be synchronized to updates the commands each time. Run once commands will be set to true if they are executed to avoid a multiple execution after an update. Each command has its own ID so the client knows which commands are new and which has to be updated. After an update the three monitors will be restarted with the new updated information.

There a three different command classes what an update can be:

### • Process

A process is an application or thread running on a system. They are accessible via name and can be monitored by their CPU and RAM usage. In some cases it has to be guaranteed to keep an application running. Therefore a command can add a process to the process monitor which will check the process health. A monitored process will be restarted if it comes to a not responding state or if the application terminates unexpected. Process commands include the process and criteria to monitor the process.

### • Task

Tasks are a kind of to-do-list for the system. This may include installations, reboots, file executions and other file operations like move, copy and delete. Also special operations as zip and unzip files, add registry keys or hardware controlling features are available via task commands. With these commands a remote control will be enabled. Complex flows of tasks can be realized in workflows which consist of a list of tasks. The execution of a task can be separated into repeating and run once tasks. Run once tasks and workflow tasks will be marked after successful execution.

### • Setting

Setting commands allow for a remote basic configuration of the client system. Such settings include hardware specific parts such as the display settings (brightness, contrast), modem settings (provider, password, username, phone number) but also operating system settings (resolution, power management, volume, security). These settings are building the basic environment for each client if the OS or the applications running on it cannot be pre-configured or need a configuration update at a later time. This allows for an automatic (re-)configuration of whole networks.

There are three main components called monitors of the client to allow for complete control of the client and ensure a desired health status of the client. For each above mentioned command class, an independent monitor exists.

### □ the Process Monitor

Surveillance of running processes and the automatic ability to restart processes which have a hanging state or crashed. So the solution can restart a digital signage player if errors occur.

### Sample:

<XmlProcess ID="PROCESS" Path="C:\Windows\system32\cmd.exe" />

### □ the Task Monitor

This part can execute tasks similar to shell commands but with an optional dependency on time and execution order. In the example, it would be possible to install a driver or a codec and restart the client afterwards or to turn the screen off for a specific time interval, for instance on Sundays. Tasks can also be repeated daily or weekly. Tasks also support file operations, registry configurations, and advanced commands for plugged in devices like screen commands and for controlling the OS.

### Sample:

<XmlTask ID="TASK:2" Action="MONITOROFF" InfiniteRepeat="false" Done="false" Day="-" Time="13:02" TimeSpan="00:02" />

### □ the Settings Monitor

Basic settings are very important for an embedded client. Thereby the display resolution, the rotation of the screen and also the screen preferences like brightness can be set. In inhomogeneous networks, individual settings are very important. Thus different screens can be used by simply changing the preferences remotely.

### Sample:

<XmlSetting ID="SETTING" Key="RESOLUTION" Value="1280:800" />

This solution can be a replacement for the above-mentioned single solutions and can be used in a network operating center to enable a professional operation of large networks.

It is also possible to send the current status of the client to the server to know which commands are executed and how often a monitored application has to be restarted.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description merely illustrates the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Method of managing a network of clients, the method comprising the steps of maintaining a plurality of commands on a server and, in response to receiving a request from a client, composing, based on a property of the client, a command file from the plurality of commands and submitting the command file to the client.

2. Method as in claim 1 wherein the property of the client takes the form of an identification of the client.

3. Method as in claim 1 wherein the property of the client takes the form of a group membership status of the client.

4. Method as in any of the preceding claims wherein the command file is composed by merging at least two of the plurality of commands.

5. Method as in any of the preceding claims comprising the subsequent step of executing the command file on the client.

6. Method as in any of the preceding claims wherein the plurality of commands is maintained by means of a web interface.

7. Method as in any of the preceding claims comprising the recurrent step of requesting the command file by the client in a predetermined time interval.

8. Method as in any of the preceding claims wherein the request is transferred by means of the Hypertext Transfer Protocol.

9. Method as in any of the preceding claims wherein at least one of the plurality of commands is expressed by means of the Extensible Markup Language.

10. Method as in any of the preceding claims wherein the network of clients takes the form of a digital signage network.

11. Method as in any of the preceding claims wherein each of the clients is connected to the server by means of a cellular radio network.

12. Method as in any of the preceding claims wherein each of the clients is configured to play media content on an output device associated with the client.

13. Method as in claim 12 wherein the media content comprises an advertisement.

14. Method as in any of the preceding claims wherein at least one of the plurality of commands serves to add a process to a process monitor of the client.

15. Method as in any of the preceding claims wherein at least one of the plurality of commands serves to reconfigure the client.
